# EUROPEAN PATENT SPECIFICATION

(11) **EP 3 313 566 B1**
(45) Date of publication and mention of the grant of the patent: **05.06.2019**
(21) Application number: 16733506.6
(22) Date of filing: 29.06.2016
(51) Int. Cl.: B01J 20/26, C09D 4/00, C08F 2/48

(54) **PREPARATION OF MOLECULARLY IMPRINTED POLYMERS BY TWO-PHOTON STEREOLITHOGRAPHY**
HERSTELLUNG VON MOLEKULAR GEPRÄGTEN POLYMEREN DURCH ZWEI-PHOTONEN-STEREOLITHOGRAFIE
PRÉPARATION DE POLYMÈRES À EMPREINTES MOLÉCULAIRES PAR STÉRÉOLITHOGRAPHIE BIPHOTONIQUE

(30) Priority: 29.06.2015 EP 15306031
(43) Date of publication of application: 02.05.2018
(73) Proprietor: Centre National de la Recherche Scientifique, 75016 Paris (FR); Université de Haute Alsace, 68093 Mulhouse Cedex (FR); UTC (Université de Technologie de Compiègne), 60203 Compiègne cedex (FR)
(72) Inventor: SPANGENBERG, Arnaud, 68720 Flaxlanden (FR); CHIA GOMEZ, Laura, 69006 Lyon (FR); MALVAL, Jean-Pierre, 68200 Mulhouse (FR); SOPPERA, Olivier, Mulhouse 68100 (MY); FUCHS, Yannick, 69469 Weinheim (DE); TON, Xuan-Anh, 94110 Arcueil (FR); BOKELOH, Frank, 49577 Ankum (DE); HAUPT, Karsten, 60190 Pronleroy (FR)
(74) Representative: Lavoix
(86) International application number: PCT/EP2016/065096
(87) International publication number: WO 2017/001451

(56) References cited:
- WO-A1-2009/014501
- WO-A1-2010/026308
- CONRAD P G ET AL: "Functional Molecularly Imprinted Polymer Microstructures Fabricated Using Microstereolithography", ADVANCED MATERIALS, WILEY - V C H VERLAG GMBH & CO. KGAA, DE, vol. 15, no. 18, 16 September 2003 (2003-09-16), pages 1541-1544, XP007904062, ISSN: 0935-9648, DOI: 10.1002/ADMA.200304602
- YANNICK FUCHS ET AL: "Photopolymerization and photostructuring of molecularly imprinted polymers for sensor applications-A review", ANALYTICA CHIMICA ACTA, vol. 717, 1 March 2012 (2012-03-01), pages 7-20, XP055236798, NL ISSN: 0003-2670, DOI: 10.1016/j.aca.2011.12.026

## Description

The present invention relates to a method for preparing molecularly imprinted polymers.

Molecularly Imprinted Polymers (MIPs) are synthetic biomimetic receptors that have proven their interest as building blocks for chemical and biosensors, affinity separation and other applications, in the fields of environmental, agricultural/food, and biomedical analyses, security, chemical process monitoring, and others.

MIPs are tailor-made antibody mimics obtained by a templating process at the molecular level. The synthesis of a MIP is performed by co-polymerization of functional and cross-linking monomers in the presence of a chosen molecular or supramolecular template that is subsequently removed from the material, leading to a cross-linked polymer matrix containing cavities that are complementary to the template in terms of size, shape, and position of functional groups. Thus a "molecular memory" is introduced into the polymer, allowing the molecular recognition and binding of target analytes with a high affinity and specificity. MIPs are physically and chemically robust, which facilitates their handling and storage, use in harsh environments, and integration into standard industrial fabrication processes. One of the greatest advantages of MIPs over naturally occurring receptors is freedom of molecular design. Thus, the stability, flexibility, and other properties are freely modulated according to need. Even functional groups that are not found in nature can be employed in these man-made materials.

For these reasons, MIPs have been widely used to respond to the growing demand in environmental analysis, chemical separations, catalysis, molecular sensors, molecular screening, clinical diagnostics, or production monitoring results in a growing interest in the development of biosensors and biochips. Moreover, compared to alternative materials based on recognition biomacromolecules such as antibodies, enzymes, or DNA, MIPs can be used in much wider operating conditions due to their chemistry based on synthetic polymers.

One of the key issues that have limited the performance of MIPs in practical applications so far is the lack of simple and robust methods to synthesize MIPs in the optimum physical form required by a given application.

Chronologically, the first polymerization method for preparing MIP was based on "bulk" or solution polymerization. This method is the most common technique due to its simplicity and versatility. It consists basically of mixing all the components (template, monomer, solvent and initiator, inter aliae) and subsequently polymerizing them by a thermal or photochemical process. The resultant polymeric block is then mechanically crushed, sieved and freed from the template to obtain particles of irregular shape and size between 20 µm and 50 µm.

Later, new methods have been developed, or existing methods adapted to the synthesis of MIPs, allowing to obtain more specific physical forms. For example, emulsion, suspension or precipitation polymerization yield spherical beads, and spin-coating results in thin films. It has also been shown that thanks to optical or mechanical methods like nanomolding, soft lithography, fountain pen nano or microlithography, mask photolithography, micro and nanostructures and patterns of MIPs can be obtained.

The scientific paper of P.G. Conrad et al "Functional Molecularly Imprinted Polymer Microstructures Fabricated Using Microstereolithography", in ADVANCED MATERIALS, vol. 15 (18), 16 September 2003 (2003-09-16), pages 1541-1544 discloses the preparation of MIPs by microstereolithography (µSL).

WO 2010/026308 discloses the preparation of MIP by radical polymerization with a light beam in visible or UV range.

However, the methods of the prior art cannot provide high-resolution 3D structured MIPs having a precise pre-determined structure.

There is thus a need for a new method for preparing molecularly imprinted polymers.

Particularly, there is a need for a new method for preparing high-resolution 3D MIPs having a precise, and possibly rather complex, pre-determined structure ("high-resolution" meaning at the sub-micrometric scale).

One aim of the present invention is thus to provide a method for preparing molecularly imprinted polymers enabling the production of high-resolution 3D Structured MIPs having a pre-determined structure.

The present invention thus relates to a method for preparing MIP using a specific photopolymerization method: the two-photon stereolithography (TPS).

The present invention relates to a method for preparing a molecularly imprinted polymer, comprising:
a) selecting a template based on the target that is intended to bind reversibly with the molecularly imprinted polymer,
b) providing a photocurable precursors composition comprising the above-selected template, at least one co-polymerizable or cross-linkable binding monomer able to reversibly bind to the above-selected template, at least one cross-linking monomer, and at least one photoinitiator, said photocurable precursors composition being able to provide the molecularly imprinted polymer by photopolymerization,
c) coating at least one part of the surface of a substrate with said photocurable precursors composition, and
d) focusing a beam of light to at least one focus region of the coating thus deposited, in order to induce two-photon absorption in said focus region and thus polymerization of said photocurable precursors composition in said focus region.

In one embodiment, the method of the invention comprises the following steps:
a) selecting a template based on the target that is intended to bind reversibly with the molecularly imprinted polymer,
b) providing a photocurable precursors composition comprising the above-selected template, at least one co-polymerizable or cross-linkable binding monomer able to reversibly bind to the above-selected template, at least one cross-linking monomer and at least one photoinitiator, said photocurable precursors composition being able to provide the molecularly imprinted polymer by photopolymerization,
c) coating at least one part of the surface of a substrate with said photocurable precursors composition, and
d) focusing a beam of light to at least one focus region of the coating thereby deposited, thereby inducing a simultaneous absorption of two-photons in said focus region and thus polymerization of said photocurable precursors composition in said focus region, wherein said step is performed by the two-photon stereolithography method.

### Step a) - Selection of the template

According to the present invention, the "template" designates the entity inducing the formation of specific binding sites through the molecular imprinting process.

The template may be either identical to the entity (also known as the "target") intended to bind to the MIP prepared according to the invention, or a derivative or substructure of this entity.

The method of the invention enables the preparation of MIPs which are intended to bind to various types of targets.

The template may be a metal, metal ion or other ion, a molecule, a macromolecule, a cell, a bacteria, a spore, a nanoparticle, a virus, a synthetic virus, a capsid, a fungus, or a biological tissue.

More particularly, the template may be selected from the group consisting of:
- amino acids, saccharides, lipids, nucleosides, nucleotides, oligomers and polymers obtained from amino acids, saccharides, lipids, nucleosides, nucleotides, such as peptides, proteins, nucleic acids, oligosaccharides and polysaccharides,
- biologically active molecules or entities, notably drugs such as antibiotics and anabolics, toxins such as bacterial or mycotoxins enzymes, proteins, doping agents, pesticides, insecticides, fungicides and herbicides, endocrine disrupting chemicals, and biomarkers,
- explosive substances,
- nanoparticles,
- eukaryotic cells, such as animal cells, human cells, plant cells, yeast cells, fungal cells, and fungi,
- bacteria,
- virus, and
- cell tissues.

The MIPs produced according to the method of the invention may comprise one type of imprints (intended to bind to a single template) or may comprise several types of imprints.

The template of the invention has at least one binding site, preferably several binding sites, identical of different, to which the co-polymerizable or cross-linkable binding monomer(s) will reversibly bond.

### Step b) - providing the photocurable precursors composition

The components of the photocurable precursors composition are intended to be combined together in order to form a pre-polymerization complex either by self-assembly or by a chemical reaction, providing the covalent, non-covalent or coordination molecular interactions required to subsequently form the cross-linked polymer containing cavities with the template bound.

By "pre-polymerization complex", it is meant a mixture of reactants ready to be polymerized and cross-linked by photopolymerization.

Said mixture comprises the co-polymerizable or cross-linkable binding monomer(s), the template, the cross-linking monomer(s), and the photoinitiator(s).

According to one embodiment, said mixture may also comprise one or more filling monomers.

When they are present, the filling monomers may or may not interact with the template in a particular way, but contribute to the constitution of the polymer backbone.

For example, in a polymer consisting of a co-polymerizable or cross-linkable binding monomer and a cross-linking monomer at a certain ratio, if one wishes to decrease the degree of cross-linking without affecting that ratio, one may substitute part of the cross-linking monomer with a filling monomer.

For example, in a polymer consisting of methacrylic acid as the co-polymerizable or cross-linkable binding monomer and ethylene glycol dimethacrylate as the cross-linking monomer, to decrease the degree of cross-linking, part of the ethylene glycol dimethacrylate can be replaced by the filling monomer methylmethacrylate, thus keeping the overall quantity of polymer, and the amount of functional monomer in that quantity of polymer, constant.

A filling monomer can also be used to adjust the character of the polymer (for example, hydrophilic or hydrophobic).

The co-polymerizable or cross-linkable binding monomer(s) naturally reversibly bind to at least one binding site of the template. The spatial arrangement of the pre-polymerization complex spontaneously formed or generated by a chemical reaction is then fixed via photopolymerization by copolymerization with the crosslinking monomer, yielding a three-dimensional network, so that the MIPs keeps a memory or imprint of the template.

The self-assembly method has the advantage that it forms a more natural binding site, allows easy removal of the template, and also offers additional flexibility in the types of monomers that can be polymerized. The method based on covalent or coordination bonds between binding monomers and template has the advantage of the pre-polymerization complex being more stable.

The photocurable precursors compositions described above are particularly adapted for the preparation of high-resolution 3D MIPs.

### Co-polymerizable or cross-linkable binding monomers

The careful choice of co-polymerizable or cross-linkable binding monomers is important to provide complementary interactions with the template.

According to one embodiment, the photocurable precursors composition comprises two different co-polymerizable or cross-linkable binding monomers able to reversibly bind to the template.

According to one embodiment, the co-polymerizable or cross-linkable binding monomer has:
- at least one first function able to polymerize with another co-polymerizable or cross-linkable binding monomer and/or with the crosslinking monomer, and
- at least one second function, different from the first function, able to form a weak bond and/or a coordination bond and/or a reversible covalent bond between said co-polymerizable or cross-linkable binding monomer and the template, thus ensuring the reversible binding between the molecularly imprinted polymer and said template.

Said co-polymerizable or cross-linkable binding monomers can be either identical, or a mixture of monomers with different second functions.

Preferably, the first function is an alkene (-CR=CH₂, R being H or C₁-C₆ alkyl), such as a vinyl (-CH=CH₂), an allyl (-CH₂CH=CH₂), an acrylate (-C(=O)CH=CH₂) or a methacrylate (-C(=O)C(CH₃)=CH₂) function.

According to one embodiment, the first function is a vinyl function.

The second function is preferably of acidic, basic, neutral, zwitterionic, polar or nonpolar character.

According to one embodiment, the second function is selected from the group consisting of hydroxyl, carboxylic acid, boronic acid, sulfonic acid, phosphoric acid, sulfuric acid, ester, amide, amine, imine, amidine, guanidine, urea, thiourea, ammonium, imidazole, pyridine, thiol, ether, aldehyde, ketone, phenyl, naphthyl, benzyl, alkyl, morpholine, piperazine, pyrrolidone, epoxy, azide, acetylene, or from their C₁-C₆ alkyl, C₃-C₁₀ cycloalkyl, phenyl or benzyl derivatives.

According to a preferred embodiment, the second function is selected from the group consisting of carboxylic acid, boronic acid, sulfonic acid, phosphoric acid, and sulfuric acid. Preferably, the second function is a carboxylic acid.

According to a preferred embodiment, the second function is selected from the group consisting of amide, amine, imine, amidine, guanidine, urea, thiourea, ammonium, imidazole, pyridine, morpholine, piperazine, and pyrrolidone. Preferably, the second function is a pyridine.

According to another embodiment, the second function is an affinity group or a chelating group.

According to this embodiment, the second function may be for example an amino acid, peptide, nucleic acid, mono or oligosaccharide, metal chelate, hormone, hormone antagonist, hormone agonist, enzyme substrate, enzyme inhibitor, antibody fragment, crown ether, or cyclodextrin.

According to another embodiment, the second function is a function allowing for a subsequent second type of polymerization.

According to this embodiment, the second function may be a function allowing for electropolymerization, such as polypyrrole, polythiophene, or polyaniline.

According to this embodiment, the second function may be a function allowing for polycondensation of organic or inorganic polymers.

A co-polymerizable or cross-linkable binding monomer suitable for the present invention is for example a monomer having a vinyl function as first function and a carboxylic acid as second function.

Another co-polymerizable or cross-linkable binding monomer suitable for the present invention is for example a monomer having a vinyl function as first function and a pyridine as second function.

According to one embodiment, the photocurable precursors composition comprises methacrylic acid, 4-vinylpyridine, or a mixture thereof as co-polymerizable or cross-linkable binding monomer(s).

According to one embodiment, the photocurable precursors composition comprises from 1% to 95%, preferably from 10% to 80%, advantageously from 20% to 60%, of co-polymerizable or cross-linkable binding monomer(s) by weight relative to the total weight of the composition.

### Cross-linking monomer

In a molecularly imprinted polymer, the cross-linking agent fulfills three major functions.

First of all, the cross-linking agent is important in controlling the morphology of the polymer matrix. Secondly, it serves to stabilize the imprinted binding sites. Finally, it imparts mechanical stability to the polymer matrix and determines its viscoelastic properties.

From a polymerization point of view, high cross-link ratios are generally preferred in order to access permanently porous MIPs and in order to be able to generate MIPs with adequate mechanical properties and stability.

According to one embodiment, the cross-linking monomer is a polymerizable monomer having at least two, for example three, unsaturated ethylene functions.

The unsaturated ethylene functions may be chosen from the group consisting of vinyl, allyl, acrylamide, isopropenyl, acrylate, methacrylate, and a mixture thereof.

Preferably, the cross-linking monomer is a polymerizable monomer having two or three identical unsaturated ethylene functions, such as methacrylate.

Preferably, the cross-linking monomer is selected from the group consisting of pentaerythritol triacrylate (PETIA), ethylene glycol di(meth)acrylate, oligoethylene glycol di(meth)acrylate, polyethylene glycol di(meth)acrylate, phenylene di(meth)acrylate, alkylene diol di(meth)acrylate, methylene bis(meth)acrylamide, alkylene bis(meth)acrylamide, piperazine bis(meth)acrylamide, divinylbenzene, divinylnaphthalene, diisopropenylbenzene, 1,3-phenylene bis(meth)acrylamide, 1,4-phenylene bis(meth)acrylamide, N,N'-1,3-phenylenebis(2-methyl-2-propenamide), N,N'-1,4-phenylenebis(2-methyl-2-propenamide), 3,5-bis(meth)acrylamido-benzoic acid, 2,6-bis(meth)acryloylamidopyridine, anhydroerythritoldi(meth)acrylate, 1,4;3,6-dianhydro-p-sorbitol-2,5-di(meth)acrylate, isopropenebis(1,4-phenylene)-di(meth)acrylate, 2,2-bis(hydroxymethyl)butanol tri(meth)acrylate, pentaerythritol trimethacrylate, pentaerythritol tetra(meth)acrylate, N,O-bis(meth)acryloyl-ethanolamine, or derivatives thereof.

PETIA imparts high viscosity to the photocurable precursors composition and the PETIA-based MIPs advantageously give good binding properties.

According to one embodiment, wherein the photocurable precursors composition comprises from 1% to 95%, preferably from 10% to 80%, advantageously from 20% to 60%, of cross-linking monomer by weight relative to the total weight of the composition

### Photoinitiator

The photoinitiator is chosen from the photoinitiators compatible with the TPS method.

The photoinitiator has the potential to initiate the free-radical or controlled/living radical or cationic polymerization of the polymer.

The photoinitiators compatible with the TPS method exhibit a 2-photon action cross section of at least 0.1 GM (Goeppert-Mayer), preferably higher than 1 GM, advantageously higher than 100 GM. A suitable 2-photon action cross section is characterized by a good 2-photon absorption cross-section and/or a good yield of production of radicals from excited states.

Preferably, the photoinitiator avoids any interaction with the cross-linking binding monomers, that would result in a decrease of the imprinting capacities.

Generally, the photoinitiator has an effective one-photon absorption in the spectral range of UV wavelengths, preferably between 150 nm and 400 nm, or in the spectral range of visible wavelengths, preferably between 400 nm and 800 nm.

Generally, the photoinitiator has a two-photon absorption section suitable for two-photon absorption for two-photon polymerization with wavelengths comprised between 200 nm and 1500 nm, preferentially from 500 nm to 1000 nm, advantageously from 700 nm to 850 nm.

According to one embodiment, the photoinitiator is selected from the group consisting of benzoin ethers, substituted acetophenones, derivatives of phosphine oxides, amino-ketones, oxysulfonyl ketones, sulfonyl ketones, metallocenes and the azo-type compounds.

According to a preferred embodiment, the photoinitiator is a derivative of phosphine oxides.

Preferably, the photoinitiator is diphenyl(2,4,6-trimethylbenzoyl)-phosphine oxide (Lucirin TPO).

According to another embodiment, the photoinitiator is a photosensitive system consisting of a combination of a first compound and a second compound operating together by hydrogen abstraction reaction and/or electron transfer, wherein:
- said first compound being selected from the group consisting of:
   - weakly basic amines, preferably tertiary, more preferably the hydroxyalkyl amines, especially methyldiethanolamine, benzylamines, aniline derivatives, more particularly the ethyl paradimethylaminobenzoate, N-phenylglycine, and
   - ascorbic acid, and
- said second compound being selected from the group consisting of acridines, preferably acriflavine or acridine orange; phenazines, preferably Safranin O; oxazines; thiazines, preferably Blue methylene or thionine; xanthenes, preferably Eosin Y, Rose Bengal or Erythrosin; rhodamines; thioxanthenes; polymethines; ketocoumarins and thioxanthones.

Preferably, the photoinitiator is a photosensitive system consisting of a combination of Eosin Y and N-phenylglycine.

According to another embodiment, the photoinitiator is a photosensitive system consisting of a combination of a first compound and a second compound operating together by energy transfer,
said first compound being selected from the group consisting of benzoin ethers, preferably 2,2-dimethoxy-2-phenyl acetophenone; or substituted acetophenones such as 2-hydroxy-2-methyl-1-phenyl-propan-1-one or 2-methyl-1-[4-(methylthio)phenyl]-2-morpholinopropan-1-one,
and said second compound being selected from the group consisting of thioxanthone derivatives, preferably isopropylthioxanthone or chlorothioxanthone; and the couramines or derivatives thereof.

According to one embodiment, the photocurable precursors composition comprises from 0.005% to 20%, preferably from 0.01% to 10%, preferentially from 0.1% to 5%, advantageously from 0.5% to 3%, and more advantageously from 1% to 2%, of photoinitiator(s) by weight relative to the total weight of the composition

### Solvent

The photocurable composition may or may not comprise a solvent.

By "solvent", it is meant a compound that merely solvates the components of the photocurable composition.

A solvent is generally added to MIP photocurable compositions to generate material (macro and/or micro and/or meso) porosity, which is usually needed to guarantee access to binding sites. Said solvent is usually called "porogenic solvent".

Solvents may be chosen for example from acetonitrile, octylnitrile, diglyme, triglyme, tetraglyme, linear or branched C₁-C₁₂ alkyl alcohols such as methanol, ethanol, propanol, isopropanol, hexanol, octanol, decanol, and dodecanol, linear or cyclic C₂-C₆ ethers such as diethyl ether or tetrahydrofurane, benzene, toluene, xylene, acetone, dimethylsulfoxide, dimethylformamide, formamide, tetrahydrofuran, chloroform, dichloromethane, tetrachloroethane, water, D₂O, linear, branched or cyclic C₆-C₁₂ alkanes such as hexane, heptane, octane, decane, dodecane, cyclohexane, and 2-methylpentane, and mixtures thereof.

According to a preferred embodiment, the photocurable precursors composition does not comprise any solvent.

Surprisingly, the inventors have found that the absence of solvent does not affect the binding property of the MIP obtained according to the method of the invention.

Actually, the inventors have surprisingly found that the MIPs prepared in the absence of solvent according to the method of the invention have better imprinting properties and binding properties with the template than the corresponding MIPs prepared in the presence of a solvent.

Preferably, the photocurable precursors composition consists of the template, the co-polymerizable or cross-linkable binding monomer(s), the cross-linking monomer(s) and the photoinitiator(s).

According to a variant, the photocurable precursors composition consists of the template, the co-polymerizable or cross-linkable binding monomer(s), the cross-linking monomer(s), the filling monomer(s) and the photoinitiator(s).

According to a preferred embodiment, the photocurable precursors composition has a viscosity higher than 10 cP at 25°C, preferably higher than 100 cP at 25°C.

The inventors have found that a photocurable composition having a viscosity higher than 100 cP at 25°C enables the formation of high-resolution 3D structured MIPs by the method of the invention.

### Step c) - coating the substrate

The substrate used in the method of the invention is preferably homogeneous and isotropic.

According to one embodiment, the substrate is selected from the group consisting of glass, quartz, metals such as silicon or germanium, silicon carbide, indium-tin oxide, graphene, and organic or inorganic polymers.

Typically, the photocurable precursors composition is deposited onto the substrate in the form of droplets or in the form of a thin film (thickness being at least as much as the height of the desired object fabricated).

Droplets may be deposited via a syringe.

A thin film may be deposited by spin-coating, dip coating or spray coating.

### Step d) - Two-photon stereolithography

In step d), a beam of light is focused by the two-photon stereolithography method to at least one focus region of the coating thereby deposited, thereby inducing a simultaneous absorption of two-photons in said focus region and thus polymerization of said photocurable precursors composition in said focus region.

Two-photon stereolithography (TPS) is a microfabrication of growing interest due to the possibility to design and directly fabricate pre-determined 3D structures using a photopolymerisable material, with many potential applications, such as in the semiconductor industry, for photonics devices, in the wireless industry, for microelectromechanical systems (MEMS) or nanoelectromechanical systems (NEMS), in the rapid prototyping industry, in tissue engineering, and in the chemical and pharmaceutical industries. TPS is also called two-photon polymerization (TPP), multiphoton absorption polymerization (MAP), 3-dimensional Direct Laser Writing (3D DLW) or 3-dimensional lithography. It is also referred in scientific popularization magazines as high resolution 3D printer since it allows fabricating 3D micro, milli and centistructures with sub-100 nm features size.

The skilled person may refer to WO 2009/014500 or WO 2009/014501 in order to implement the TPS method.

In conventional 3D printing, additive processes are involved in which the fabrication is done layer by layer, thus limiting the resolution to few micrometers.

Unlike the latter, TPS utilizes localized two-photon absorption (TPA) process to induce structural changes in a material. Two different mechanisms have been described for TPA: the sequential excitation, and the simultaneous two-photon excitation. In the frame of TPS, only the second one is involved. In this case, a virtual intermediate state is created by interaction of the material with the first absorbed photon. In order to reach the first real excited state, a second photon has to be absorbed during the short lifetime (around 10⁻¹⁵ s) of this virtual state. To increase the probability of such a non-linear absorption process, high density of photons is requested. Consequently, in main applications (including TPS) where TPA is involved, objectives with high numerical aperture (NA) and ultra short pulse laser are employed for increasing spatial and temporal density of photons. The main interest of TPA compared to single photon absorption is that excitation is localized within the focal volume of a laser beam.

Consequently, it gives access to 3D microfabrication since the polymerization threshold is not reached out of the focal volume. Typically, volume less than 1 µm³ can be addressed.

By controlling where two-photon absorption/excitation occurs in the target, such as by focusing a light beam at a selected focal point on the target and moving the focal point in a pre-selected pattern, small 3D objects can be manipulated and fabricated with precise control, such as with submicron resolution. Up to now, the smallest feature demonstrated using a standard configuration of this technique with a full optimized optical system is a single line with a width less than 100 nm, such as 65-nm width.

However, this method is still very challenging because it is usually difficult to combine antagonist parameters to insure the integrity of the functional material and the 3D printing. In particular, there is, so far, to the best knowledge of the inventors, no paper describing the 3D structuring of MIPs by TPS.

Surprisingly, the inventors have discovered that the TPS is compatible with the preparation of MIPs, particularly with the preparation of high-resolution 3D structured MIPs.

The inventors have developed original formulations combining the TPS capability enabling sub-microscale 3D photopatterning with MIP properties.

High-resolution 3D structured MIPs were synthesized and their recognition properties were evaluated. Highly porous microstructures were produced. The method of the invention significantly simplifies the integration of MIP into complex devices for the elaboration of highly specific biosensors for example.

The recourse to photochemically assisted polymerization to prepare the MIP has several specific advantages: with photopolymerization, almost all physical forms of MIP are accessible (for example, monoliths, nanoparticles, supported thin films, nanostructured materials, cantilevers, grids, and controlled-porous materials). This combined with the broad range of commercially available photoinitiators makes it a very versatile method.

In addition, photopolymerization allows for an accurate spatial control of the irradiation, as well as a good control over the polymerization kinetics since the intensity of light can easily be fine-tuned, which is beneficial for MIP structuring in the x, y and z dimensions.

The room temperature process is also favorable to an efficient complexation between the template and the co-polymerizable or cross-linkable binding monomer that significantly improves the specificity of the molecular recognition sites.

Finally, the possibility of spatially controlling the polymerization process is a determining advantage for an easy integration of the MIP into a device to build an integrated sensor. One possibility is to use the microfabrication possibility to fabricate an optical transducer (such as holographic sensors or photonic crystals). In this case, the chemical information is transformed into an optical signal that can be easily monitored.

According to the method of the invention, MIPs are processed during step d) by focusing a beam of light to a focus region in the photocurable precursors composition to induce two-photon absorption in the focus region, and thus polymerization of the photocurable precursors composition in the focus region. As two-photon absorption is limited to a small region, the photocurable precursors composition in the areas outside the focus region will not be polymerized.

In one embodiment, the photopolymerization step is carried out with the photocurable precursors composition in contact with air, which guarantees a minimum concentration of oxygen dissolved in the photocurable precursors composition. Oxygen is known to be a strong quencher of free-radical polymerization. Thus, it acts as an inhibitor of propagation of the polymerization, which allows a precise control of the polymerized volume and thus guarantee high resolution lithography.

A consequence of two-photon absorption initiated photochemical reaction is that sufficient photochemical reaction can occur within a confined region, the focus region around the beam waist, to cause structural changes within the focus region, but not outside the focus region because the probability of two-photon absorption outside the focus region is too low to cause significant structural change. Typically, the volume of the focus region in two-photon absorption can be about 10⁻¹² cm⁻³ or less and is called voxel hereafter.

According to one embodiment, the light beam is scanned across the photocurable precursors composition according to a preselected pattern so that the beam is focused to different pre-selected regions to induce polymerization at the pre-selected regions.

The beam may be scanned across a transversal plane that is perpendicular to an axis, such as the optical axis of the focusing device that focuses the beam onto the material. Once the scan in one plane of the photocurable precursors composition is completed, the coated substrate may be moved relative to the focusing device to scan another plane according to a pre-selected pattern which may be different from or the same as the pattern for the previous step. The scanning may be repeated to polymerize selected regions of the photocurable precursors composition until final achievement of the targeted object. Thus, different regions in the photocurable precursors composition are polymerized according to a pre-selected design voxel-by-voxel.

The photocurable precursors composition in the polymerized region may be hardened and solidified.

As two-photon absorption can occur only within a limited portion of the beam path at a selected depth in the photocurable precursors composition, the MIP may be formed voxel-by-voxel without having to add new photocurable precursors composition during the scan. The slower production rate compared to conventional stereolithography process can be efficiently counterbalanced by multiplying the polymerizing beams. It can be done by using a spatial light modulator (SLM) which can dynamically change the light intensity pattern generated for polymerization and can split the main beam in few thousands of sub-beams, making possible the simultaneously fabrication of few thousands of 3D objects.

Parallel polymerization of numerous 3D structures with a quality achievable with non-SLM beams have been demonstrated, thus increasing the production rate.

When a beam with a sufficient power (beam intensity) and suitable wavelength or spectrum is focused into the photocurable precursors composition, two-photon absorption occurs with a high frequency and photochemical reactions such as photo-induced polymerization will proceed with a sufficiently high rate.

According to one embodiment, the beam of light is provided by a lamp, a light-emitting diode or a laser beam, having a wavelength preferably comprised from 150 nm to 1500 nm, preferentially from 500 nm to 1000 nm, advantageously from 700 nm to 850 nm.

Preferably, the beam of light is provided by a pulsed laser beam, used with pulse durations between 1 femtosecond and 1 microsecond, and a frequency between 1 kHz and 120 MHz.

In another embodiment, the beam of light is provided by a pulsed laser beam, used with pulse durations between 1 femtosecond and 1 picosecond and/or having a wavelength comprised between 700 nm and 1100 nm.

In one embodiment, the un-polymerized portions of the photocurable precursors composition may be removed from the polymerized portion and the polymerized portion(s) of the photocurable precursors composition forms a 3D MIP attached on the substrate.

The un-polymerized portions can be removed after full completion of the scanning process. However, in case of multiplexing purposes (see hereafter), the un-polymerized portions can be removed after completion of the polymerization of the first material (first MIP), allowing the subsequently polymerization of a second material (Second MIP).

This embodiment allows the preparation of high-resolution 3D structured MIPs with unlimited specific targets on the same substrate which can be a lab-on-chip or microTAS.

In one embodiment, two-photon absorption will induce certain chemical reactions in the selected regions of the photocurable precursors composition. The chemical reactions result in a new material (polymerized material resulting from the photocurable precursors composition). The new material and the original material will have different chemical or physical properties. Thus, the removal or separation of these materials may be performed based on these differences. For example, if one material is a liquid and the other is a solid, they may be readily separated. In other cases, one material may be soluble and the other may be insoluble in a particular solvent. Thus, the soluble one may be removed by washing using the solvent. In some cases, one material may also be easily removed by another technique, while the other material is substantially unaffected by that technique.

According to one embodiment, the un-polymerized portions of the photocurable precursors composition may be removed from the polymerized portion by immersing or rinsing the sample with a solvent of the photocurable precursors composition that is not a solvent for the polymer.

This solvent may be chosen for example from acetonitrile, octylnitrile, diglyme, triglyme, tetraglyme, linear or branched C₁-C₁₂ alkyl alcohols such as methanol, ethanol, propanol, isopropanol, hexanol, octanol, decanol, and dodecanol, linear or cyclic ethers such as diethyl ether or tetrahydrofurane, benzene, toluene, xylene, acetone, dimethylsulfoxide, dimethylformamide, formamide, tetrahydrofuran, chloroform, dichloromethane, tetrachloroethane, water, D₂O, linear, branched or cyclic alkanes such as hexane, heptane, octane, decane, dodecane, cyclohexane, 2-methylpentane, aldehydes, ketones like cyclohexanone, supercritical CO₂, and mixtures thereof.

### Products and uses

Fast and cost-effective molecularly imprinted polymer technique has applications in many fields of chemistry, biology, engineering, and medicine, particularly as an affinity material for sensors, for the detection of chemicals (for example toxins, herbicides, pesticides, antimicrobials, anabolics, plasticisers, dyes, drugs, endocrine disrupting chemicals), in food, drinking water and in environmental samples, for the detection of drugs and biomarkers in biological samples (biomedical analysis), for the detection of explosives and toxins in the security field, for chemical process monitoring, as adsorbents for solid phase extraction, binding assays, immunoassay-like techniques, chromatographic stationary phase, catalysis, drug development and screening, byproduct removal in chemical reaction, drug delivery, targeting theranostics (medical treatment), for the manufacture of microfluidic system and for the manufacture of MEMS and bioMEMS.

Molecularly imprinted polymers pose this wide range of capabilities in extraction through highly specific micro-cavity binding sites. Due to the specific binding sites created in a MIP this technique is showing promise in analytical chemistry. Being more stable, cheaper and easier to produce, and easier to integrate into devices and processes, than natural receptor molecules like antibodies, enzymes, hormone receptors, other proteins, aptamers, peptides, MIPs have a great potential both for research and for the above-mentioned applications. Such possible medical applications include controlled release drugs, drug monitoring devices, and biological receptor mimetics. Beyond this MIPs show a promising future in the developing knowledge and application in food sciences.

One of the most original possibilities given by the TPS is in relation with the possibility to generate high-resolution 3D arbitrary microstructures. In the context of MIP, this unique feature has several advantages like building highly porous structures with high accessibility of target towards binding sites. Moreover, complex designs can be produced to facilitate the transduction of the chemical signal into optical signal for instance.

The present disclosure also relates to molecularly imprinted polymer obtainable by the method of the invention, preferably to high-resolution 3D molecularly imprinted polymer obtainable by the method of the invention.

High-resolution 3D microstructures may be microwires, microdots, microspheres, micropillaries, microfilaments, microwells, microchannels, microcantilevers, or any complex 3D structure designed by computer.

A "microstructure" is an object, preferably a 3D object, having dimensions comprised from 1 µm to 1 mm, preferably from 1 µm to 100 µm. Additionally, replication of such 3D object can be performed on large surface (few cm² such as standard silicon wafer). Besides, centimeter 3D structures can be realized with sub-micrometric resolution.

For simple structure such as line, dot, sphere, ellipsoid, sub-100nm structures can be achieved. For instance, single line of 65-nm to 100-nm width and few micrometers length can be obtained. Single dots of 80 nm to 100 nm width and 600 nm to 800 nm high can be obtained. Single dots of 40 nm width and 40 nm high may also be obtained by using STED-like lithography.

The present disclosure also relates to the use of a molecularly imprinted polymer obtainable by implementing the method of the invention for the manufacture of a qualitative and/or quantitative detector (for example, diffraction gratings, holograms, photonic crystals, microcantilevers, optical waveguides) able to detect the presence of the entity to be detected (target) defined above in a test sample.

The present disclosure also relates to a qualitative and/or quantitative detector for target defined above comprising at least one molecularly imprinted polymer obtainable by implementing the method of the invention.

The present disclosure also relates to the use of a molecularly imprinted polymer obtainable by implementing the method of the invention for the manufacture of a reversible sensor of the target defined above.

The present disclosure also relates to a reversible sensor of the target defined above comprising at least one molecularly imprinted polymer obtainable by implementing the method according to the invention.

The present disclosure also relates to the use of molecularly imprinted polymer obtainable by implementing the method of the invention for the manufacture of a separation device for the target defined above.

The present disclosure also relates to a separation device for the target defined above comprising at least one molecularly imprinted polymer obtainable by implementing the method according to the invention.

The present disclosure also relates to the use of molecularly imprinted polymer obtainable by implementing the method of the invention for the manufacture of a microfluidic system.

The present disclosure also relates to a microfluidic system comprising at least one molecularly imprinted polymer obtainable by implementing the method according to the invention.

The present disclosure also relates to the use of molecularly imprinted polymer obtainable by implementing the method of the invention for the manufacture of a bioMEMS.

The present disclosure also relates to a bioMEMS comprising at least one molecularly imprinted polymer obtainable by implementing the method according to the invention.

### EXAMPLES

Methacrylic acid (MAA), 4-vinylpyridine (4-VPy), *N*-carbobenzyloxy-L-phenylalanine (Z-L-Phe) and dansyl-*L*-phenylalanine (dansyl-*L*-Phe) were purchased from Sigma-Aldrich. Lucirin-TPO and pentaerythritol triacrylate (PETIA) were obtained from BASF.

In the following examples, *N*-carbobenzyloxy-*L*-phenylalanine (*Z*-*L*-Phe) was chosen as a template, because molecularly imprinting can be demonstrated by investigating the binding of its fluorescent analogue, dansyl-*L*-phenylalanine (dansyl-*L*-Phe). Moreover, selectivity of the material can be evaluated by using the *D*-enantiomer of this compound (dansyl-*D*-Phe).

However, the present invention is not limited to the preparation of MIPs selective to this template.

In the following Example 1, bulk MIPs were prepared according to a method which does not correspond to the present invention. Indeed, the polymerization step does not implement 2-photon absorption (TPS). However, Example 1 proved that the selected starting materials and template are suitable for the synthesis of a material having efficient binding properties with the target (which was identical to the template in this case).

In the following Example 2, 2D- and 3D-microstructured MIPS were prepared using the photocurable precursors compositions of Example 1, but according to a method which corresponds to the present invention.

### Comparative Example 1

### Synthesis of bulk MIPs

The photocurable precursors composition consisting of 0.05 mmol of template *Z*-*L-*Phe, 0.2 and 0.2 mmol of cross-linking binding monomers methyacrylic acid (MAA) and 4-vinylpyridin (4-VPy), 2 mmol of cross-linker pentaerythritol triacrylate (PETIA) and 0.0192 mmol of photoinitiator Lucirin-TPO were mixed as such, or dissolved in a solvent (729 µL of acetonitrile or 274 µL of triglyme), in a four milliliter glass vial fitted with an airtight septum, and the mixture was purged with nitrogen for 2 minutes.

The amount of photoinitiator was set to 0.3 mol% relatively to the polymerizable double bonds. Polymerization was carried out with a daylight lamp equipped with a 18W standard tube. The use of a daylight lamp is not suitable for carrying TPS.

After overnight irradiation, the polymers were recovered by breaking the glass vials. The monoliths were manually crushed in a mortar and then transferred to microcentrifuge tubes, suspended in methanol and finely ground with 2.8 mm-diameter ceramic beads in a Precellys 24 homogenizer (Bertin Technologies, Montigny le Bretonneux, France). The polymers were then transferred to 50 mL centrifuge tubes and washed on a tube rotator (SB2, Stuart Scientific) with 3 rounds of methanol-acetic acid (9:1), and then rinsed three times with methanol. The polymer particles were finally dried overnight under vacuum and stored at 4°C.

Three different *Z*-*L*-Phe bulk MIPs were thus prepared:
- without solvent (**MIP-S0**),
- with acetonitrile (**MIP-ACN**), and
- with triglyme (**MIP-T50**).

Three corresponding non-imprinted control polymers (**NIP-S0, NIP-ACN** and **NIP-T50**) were prepared using the same protocol except for the omission of the template.

### Evaluation of binding properties of bulk MIPs

The binding properties of the materials prepared above were evaluated by equilibrium binding experiments in anhydrous acetonitrile (ACN), with fluorescence measurements on a Varian Cary Eclipse fluorescence spectrophotometer (Agilent Technologies, Palo Alto, CA, USA). The excitation/emission wavelengths were set at 340/520 nm.

A stock solution of dansyl-*L*-Phe (1 mM) was prepared in ACN and stored in the dark at -20°C. For the assays, an aliquot of the stock solution was freshly diluted to 100 µM in ACN. The polymers were suspended by sonication in the incubation solvent. From this stock suspension, polymer concentrations ranging from 0 to 9 mg/mL were pipetted in 1.5 mL polypropylene microcentrifuge tubes and 100 µL of dansyl-*L*-Phe solution was added. The final volume was adjusted to 1 mL with solvent. The tubes were incubated protected from the light overnight at ambient temperature on a tube rotator. They were then centrifuged at 19,000g for 25 min and the amount of free dansyl-*L*-Phe in the supernatant was quantified by fluorescence measurements. The amount of analyte bound to the polymers was calculated by subtracting the amount of free analyte from the initial amount of analyte added to the mixture.

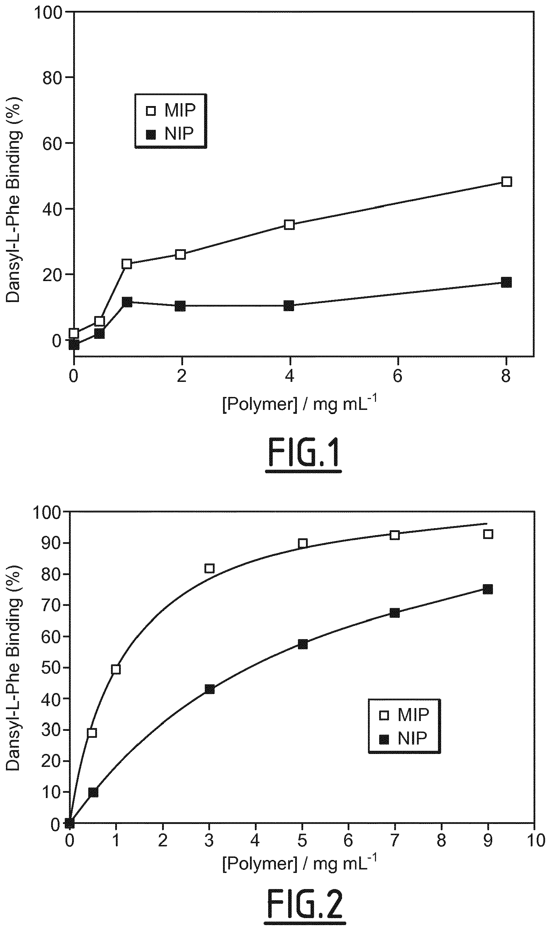

Figure 1 shows the binding properties of *Z*-*L*-Phe bulk **MIP-S0** prepared in Example 1, in comparison with the corresponding non-imprinted control polymer (**NIP-S0**). Accordingly, **MIP-S0** has 40% of binding with dansyl-*L*-Phe, even in absence of solvent during the preparation.

Figure 2 shows the binding properties of *Z*-*L*-Phe bulk **MIP-ACN** prepared in Example 1, in comparison with the corresponding non-imprinted control polymer (**NIP-ACN**)**.** Accordingly, **MIP-ACN** has 90% of binding with dansyl-*L*-Phe.

Figure 3 shows the binding properties of *Z*-*L*-Phe bulk **MIP-T50** prepared in Example 1, in comparison with the corresponding non-imprinted control polymer (**NIP-T50**). Accordingly, **MIP-T50** has 60% of binding with dansyl-*L*-Phe.

Thus, all 3 formulations bound specifically to dansyl-*L*-Phe.

### Example 2

### Synthesis of microstructured MIPs

For TPS fabrication, a femtosecond laser source (Chameleon Ultra II, 140 fs @ 800 nm) was combined to a TeemPhotonics microfabrication 3D system.

For 2D and 3D microstructures, the beam was introduced via a 40x objective (NA: 0.65), exposure time was set to 10 ms and laser power was set to 15 mW (measured after the objective).

A 100x objective (NA: 1.21) was also used for higher resolution, exposure time was set to 10 ms and laser power was set to 10 mW. With this configuration, lines of 250 nm width have been obtained. In z axis, features of 800 nm have been demonstrated.

One drop of the photocurable precursors compositions of Example 1 was then cast on the top of a functionalized glass substrate and the laser beam focused on the substrate-composition interphase. 2D- and 3D-microstructures were fabricated voxel-by-voxel with writing starting from the substrate.

High-resolution 3D structures were synthetized by TPS microstructuring using a computer driven piezo-electric system which automatically reproduced 3D shapes generated by computer.

### Synthesis and fluorescence microscopy imaging of microsquares MIPs

Two different types of microsquares (20 µm x 20 µm x 2-5 µm) were produced by TPS, using **MIP-S0** and **MIP-T50** photocurable precursors compositions respectively.

In order to study their binding properties, the **MIP-S0** and **MIP-T50** microsquares were incubated 1 hour with 10 µM dansyl-*L*-Phe in ACN, rinsed briefly with ACN and visualized by fluorescence microscopy.

The fluorescence microscope images were recorded using a Leica DMI6000 B fluorescence microscope, equipped with 360 nm excitation/470 nm emission filter cubes. The fluorescence intensities were measured using the software ImageJ (public domain, http://rsb.info.nih.gov/ij/). The parameters used for the fluorescence microscope were fixed for the gain at 2 and the intensity at 5. The exposure time is mentioned in the legend for the corresponding figure.

The highest fluorescence signal was obtained without solvent (**MIP-S0**). The fluorescence signal was twice higher than for **MIP-T50.** Moreover, this binding property of **MIP-S0** was associated to a better imprinting factor defined as the rate of retention for the MIP to the rate of retention for the NIP (4.7 for **MIP-S0** vs 1.6 for **MIP-T50**).

These results demonstrated that a solvent is not necessary in a MIP photocurable precursors composition for TPS applications, either for microstructuring and molecularly imprinting.

The efficient imprinting in these microstructures was also demonstrated using the two enantiomer analogs of dansyl-phenylalanine: enantiomer *L* and enantiomer *D*.

**MIP-S0** was prepared with *Z-L*-phenylalanine and incubation was carried out with the 2 enantiomers. The rebinding with dansyl-*L*-Phe was 2 times higher in intensity than with the dansyl-*D*-Phe. On the contrary, the level of rebinding was non-specific with the **NIP-S0,** which corroborates a selective imprinting.

### Synthesis of 2D-microstructured MIPs

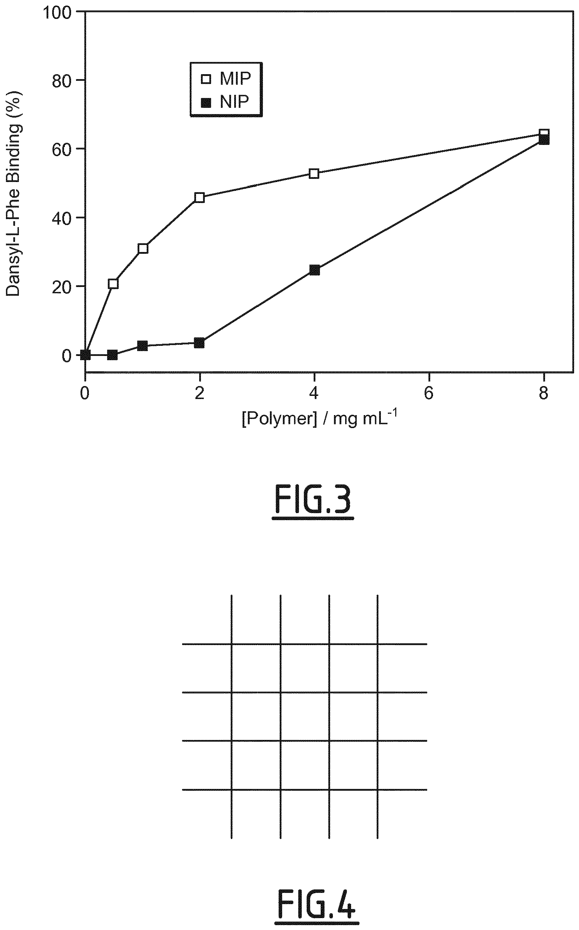

Figure 4 shows a schematic representation of a MIP consisting in crossed lines, with a width as small as 250 nm, which was generated with the **MIP-S0** photocurable precursors composition by the method of the invention. A 100x objective (NA: 1.21) was used, exposure time was set to 10 ms and laser power was set to 10 mW. Such structures could be easily used as diffraction gratings for label-free detection.

### Synthesis of 3D-microstructured MIPs

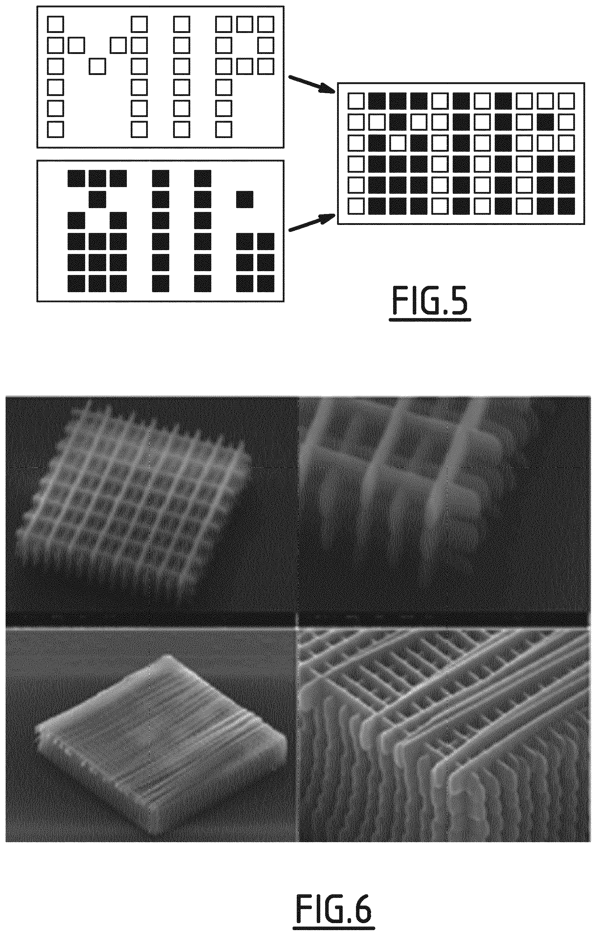

Figure 5 shows a schematic representation of an array of MIP and NIP microdots, which was generated on a substrate, with **MIP-S0** and **NIP-S0** photocurable precursors compositions, by the method of the invention. A 40x objective (NA: 0.65) was used, exposure time was set to 10 ms and laser power was set to 10 mW.

A first MIP photocurable precursors composition (**MIP-S0**) according to the invention was cast on a functionalized glass slide, irradiated and developed using an appropriate solvent. Then, a second photocurable precursors composition (**NIP-S0**) was cast and the process is repeated. This can be repeated as many times as needed. The camera installed on the microfabrication machine allows to precisely repositioning the writing beam.

When put in contact with dansyl-*L*-Phe, the differential binding between the MIP and the NIP revealed the latent image. This experiment demonstrated the possibility to highly multiplex the detection of several molecules on the same substrate.

Further, an array of crossed-lines microstructure (such as in Figure 4) was repeated by overwriting several times by introducing an off-set in the z-direction, thus increasing the height of the microstructured MIP. The height of the structures was chosen between 2 µm and 18 µm.

An increase of the fluorescence was observed with an increasing of the height. A quantitative measurement showed a linear increase of the fluorescence with height, which demonstrated that the 3D structuring is not affecting the molecular imprint. This method can be thus easily used to increase the fluorescence signal of MIP microstructures to increase the sensitivity limit of the device.

Figure 6 shows MIP woodpiles (also called photonic crystals), which were obtained with **MIP-S0** by the method of the invention. A 40x objective (NA: 1.21) was used, exposure time was set to 10 ms, and laser power was set to 10 mW. Sub-100nm features were also achieved with an objective with NA over 1.4.

Further photonic crystals were also fabricated by over-writing (in the z-axis) of MIP woodpiles (80 µm x 80 µm) by the method of the invention.

A 40x objective (NA: 0.65) was used, exposure time was set to 10 ms and laser power was set to 12.7 mW. Distance between layers was set at 3 µm. Interspacing of lines was set at 10 µm for each structure. The height of the structures was chosen from 3 µm to 13 µm.

MIP woodpiles are very interesting candidates to generate highly sensitive optical sensors. They can be built with x40 (first raw) and x100 (second raw) microscope objective. In both cases, the 3D structures were free-standing and the lines used to generate the woodpile structure are well defined. The recourse to x100 objective allows generating very small building blocks. Moreover, it was shown that the fluorescence signal is proportional to the height of the woodpile. These results demonstrated that the accessibility of the target to the binding sites is preserved for high 3D structures. Moreover, building 3D microobjects with molecular imprint properties allows improving the signal to noise ratio. This allows simplifying the interrogation techniques in sensing applications. For example, in sensing devices, wide-field microscopy can be used instead of confocal microscopy.

### Example 3:

### MIP Microcantilever

A free-standing microgravimetric sensing element in the form of a MIP microcantilever, combining the recognition element (MIP) and part of the transducer (cantilever) in one structure, was made by TPS (O. Soppera et al., Adv. Mat., 2016 DOI:10.1002/adma.201600218).

The photocurable precursors compositions of Example 1 were used with Z-L-Phe as the template. Arrays of 20 µm x 60 µm cantilever sensors (5 µm thick) including their clamped support were written in a single step on a glass support, according to operating conditions of example 2. They were excited to their resonance with a piezoelement glued onto the support, and the resonance frequency measured with a laser Doppler vibrometer, after elution of the template (binding sites free), with the analyte (Z-L-Phe) bound (binding sites occupied), and again after elution of the analyte. Binding of the target analyte induced a reversible shift of the resonance frequency of the sensors with a relative variation higher than 1%. This variation measured for the MEMS prepared according to the invention is at least one order of magnitude higher when compared to commercially available microgravimetric devices such as Quartz Crystal Microbalance (QCM).

This demonstrates that these MIP microcantilevers produced by microscale 3D writing according to the invention can be used as reusable label-free chemical sensors.

The same strategy can be applied to all types of traditional microelectromechanical systems/nanoelectromechanical systems (bridges, cantilevers...), but also to systems with a more complex architecture that are difficult to fabricate by other means (for example, hollow microcantilevers and microbridges with increased surface area, microfluidic microcantilevers and microbridges).

### Example 4:

### MIP diffraction grating

Diffraction gratings are an example of MIP microstructures that were prepared by TPS, according to the precursors compositions of example 1 and operating conditions of example 2. In this example, the target molecule is ENRO.

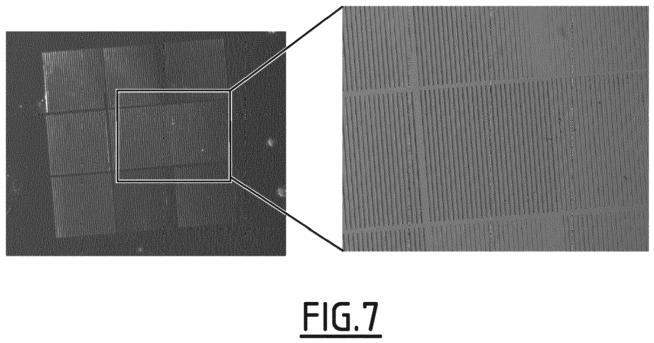

The TPS is used to fabricate in a glass sample a series of parallel lines that can diffract light, as shown in Figure 7. The presence (or not) of the target molecule inside the MIP modifies the refractive index and the volume of the lines. This has a direct impact on the optical properties of the grating: the diffraction efficiency (defined as the ratio of intensity between the diffracted light and incident light) is modified and a relation can be built between the number of target molecules embedded in the MIP grating and the diffraction efficiency. This relation is used to quantitatively determine the quantity of target molecule in the polymer. This quantity being linked to the quantity of target in the surrounding medium, the grating can be used as a chemical sensor.

The interest of TPS in this example is to provide an easy way to integrate by direct laser write the MIP material in a complex system.

## Claims

1. A method for preparing a molecularly imprinted polymer, comprising:
a) selecting a template based on the target that is intended to bind reversibly with the molecularly imprinted polymer,
b) providing a photocurable precursors composition comprising the above-selected template, at least one co-polymerizable or cross-linkable binding monomer able to reversibly bind to the above-selected template, at least one cross-linking monomer and at least one photoinitiator, said photocurable precursors composition being able to provide the molecularly imprinted polymer by photopolymerization,
c) coating at least one part of the surface of a substrate with said photocurable precursors composition, and
d) focusing a beam of light to at least one focus region of the coating thereby deposited, thereby inducing a simultaneous absorption of two-photons in said focus region and thus polymerization of said photocurable precursors composition in said focus region, wherein said step is performed by the two-photon stereolithography method.

2. The method according to claim 1, wherein the photocurable precursors composition does not comprise any solvent.

3. The method according to any one of claim 1 to 2, wherein the template is selected from the group consisting of:
- amino acids, saccharides, lipids, nucleosides, nucleotides, oligomers and polymers obtained from amino acids, saccharides, lipids, nucleosides, nucleotides, such as peptides, proteins, nucleic acids, oligosaccharides and polysaccharides,
- biologically active molecules or entities, notably drugs such as antibiotics and anabolics, toxins such as bacterial or mycotoxins enzymes, proteins, doping agents, pesticides, insecticides, fungicides and herbicides, endocrine disrupting chemicals, and biomarkers,
- explosive substances,
- nanoparticles,
- eukaryotic cells, such as animal cells, human cells, plant cells, yeast cells, fungal cells, and fungi,
- bacteria,
- virus, and
- cell tissues.

4. The method according to any one of claims 1 to 3, wherein the photocurable precursors composition comprises two different co-polymerizable or cross-linkable binding monomers able to reversibly bind to the template.

5. The method according to any one of claims 1 to 4, wherein the co-polymerizable or cross-linkable binding monomer has:
- at least one first function able to polymerize with another co-polymerizable or cross-linkable binding monomer and/or with the crosslinking monomer, and
- at least one second function, different from the first function, able to form a weak bond and/or a coordination bond and/or a reversible covalent bond between said co-polymerizable or cross-linkable binding monomer and the template, thus ensuring the reversible binding between the molecularly imprinted polymer and said template.

6. The method according to claim 5, wherein the first function is an alkene, such as a vinyl, an allyl, an acrylate or a methacrylate function.

7. The method according to claim 6, wherein the second function is selected from the group consisting of hydroxyl, carboxylic acid, boronic acid, sulfonic acid, phosphoric acid, sulfuric acid, ester, amide, amine, imine, amidine, guanidine, urea, thiourea, ammonium, imidazole, pyridine, thiol, ether, aldehyde, ketone, phenyl, naphthyl, benzyl, alkyl, morpholine, piperazine, pyrrolidone, epoxy, azide, acetylene, or from their C₁-C₆ alkyl, C₃-C₁₀ cycloalkyl, phenyl or benzyl derivatives.

8. The method according to any one of claims 1 to 7, wherein the photocurable precursors composition comprises methacrylic acid, 4-vinylpyridine, or a mixture thereof as co-polymerizable or cross-linkable binding monomer(s).

9. The method according to any one of claims 1 to 8, wherein the cross-linking monomer is a polymerizable monomer having at least two, for example three, unsaturated ethylene functions.

10. The method according to any one of claims 1 to 9, wherein the photoinitiator has an effective one-photon absorption in the spectral range of UV wavelengths, preferably between 150 nm and 400 nm, or in the spectral range of visible wavelengths, preferably between 400 nm and 800 nm.

11. The method according to any one of claims 1 to 10, wherein the photoinitiator has a two-photon absorption section suitable for two-photon absorption for two-photon polymerization with wavelengths comprised between 200 nm and 1500 nm, preferentially from 500 nm to 1000 nm, advantageously from 700 nm to 850 nm.

12. The method according to any one of claims 1 to 11, wherein the photoinitiator is selected from the group consisting of benzoin ethers, substituted acetophenones, derivatives of phosphine oxides, amino-ketones, oxysulfonyl ketones, sulfonyl ketones, metallocenes and the azo-type compounds.

13. The method according to any one of claims 1 to 12, wherein the photoinitiator is diphenyl(2,4,6-trimethylbenzoyl)-phosphine oxide (Lucirin TPO).

14. The method according to any one of claims 1 to 13, wherein during step d) the beam of light is scanned across the photocurable precursors composition according to a pre-selected pattern so that said beam is focused to different pre-selected regions, to induce polymerization of said photocurable precursors composition at said pre-selected regions.

15. The method according to any one of claims 1 to 14, comprising a further step of removing the un-polymerized regions of the coating so that the molecularly imprinted polymer remains attached on the substrate.

## Patentansprüche

1. Ein Verfahren zur Herstellung eines molekular geprägten Polymers, umfassend:
a) Auswählen einer Matrize basierend auf dem Target, welches vorgesehen ist, reversibel mit dem molekular geprägten Polymer zu binden,
b) Bereitstellen einer photohärtbaren Vorläuferzusammensetzung umfassend die obig ausgewählte Matrize, mindestens ein copolymerisierbares oder vernetzbares, bindendes Monomer, das in der Lage ist, reversibel mit der obig ausgewählten Matrize zu binden, mindestens ein vernetzendes Monomer und mindestens einen Photoinitiator, wobei die photohärtbare Vorläuferzusammensetzung das molekular geprägte Polymer mittels Photopolymerisation bereitstellen kann,
c) Beschichten mindestens eines Teils einer Oberfläche eines Substrats mit der photohärtbaren Vorläuferzusammensetzung, und
d) Fokussieren eines Lichtstrahls auf mindestens einen Fokusbereich der so abgeschiedenen Beschichtung, um auf diese Weise eine simultane Zwei-Photonen-Absorption in diesem Fokusbereich und so Polymerisation der photohärtbaren Vorläuferzusammensetzung in diesem Fokusbereich zu induzieren, wobei dieser Schritt mittels eines Zwei-Photonen-Stereolithographieverfahrens durchgeführt wird.

2. Das Verfahren gemäß Anspruch 1, wobei die photohärtbare Vorläuferzusammensetzung kein Lösemittel umfasst.

3. Das Verfahren gemäß einem der Ansprüche 1 bis 2, wobei die Matrize ausgewählt ist aus der Gruppe bestehend aus:
- Aminosäuren, Sacchariden, Lipiden, Nukleosiden, Nukleotiden, Oligomeren und Polymeren erhalten von Aminosäuren, Sacchariden, Lipiden, Nukleosiden, Nukleotiden, wie Peptide, Proteine, Nukleinsäuren, Oligosaccharide und Polysaccharide,
- biologisch aktiven Molekülen oder Entitäten, insbesondere Wirkstoffen wie Antibiotika und Anabolika, Toxinen, wie bakterielle oder Mycotoxine, Enzymen, Proteinen, Doping-Substanzen, Pestiziden, Insektiziden, Fungiziden und Herbiziden, endokrinen, disruptiven Chemikalien, und Biomarkern,
- explosiven Substanzen,
- Nanopartikeln,
- Eukaryotischen Zellen, wie Tierzellen, menschliche Zellen, Pflanzenzellen, Hefezellen, Pilzzellen, und Pilzen
- Bakterien,
- Virus, und
- Zellgeweben.

4. Das Verfahren gemäß einem der Ansprüche 1 bis 3, wobei die photohärtbare Vorläuferzusammensetzung zwei verschiedene copolymerisierbare oder vernetzbare, bindende Monomere umfasst, welche in der Lage sind, reversibel an die Matrize zu binden.

5. Das Verfahren gemäß einem der Ansprüche 1 bis 4, wobei das copolymerisierbare oder vernetzbare, bindende Monomer:
- mindestens eine erste Funktionalität, welche in der Lage ist, mit einem anderen copolymerisierbaren oder vernetzbaren, bindenden Monomer und/oder mit dem vernetzenden Monomer zu polymerisieren, und
- mindestens eine zweite Funktionalität hat, verschieden von der ersten Funktionalität, welche in der Lage ist, eine schwache Bindung und/oder eine koordinative Bindung und/oder eine reversible kovalente Bindung zwischen dem copolymerisierbaren oder vernetzbaren Monomer und der Matrize zu bilden, um so die reversible Bindung zwischen dem molekular geprägten Polymer und der Matrize sicherzustellen.

6. Das Verfahren gemäß Anspruch 5, wobei die erste Funktionalität eine Alken-, wie eine Vinyl-, eine Allyl-, eine Acrylat- oder eine Methacrylat-Funktionalität ist.

7. Das Verfahren gemäß Anspruch 6, wobei die zweite Funktionalität ausgewählt ist aus der Gruppe bestehend aus Hydroxyl, Carbonsäure, Boronsäure, Sulfonsäure, Phosphorsäure, Schwefelsäure, Ester, Amid, Amin, Imin, Amidin, Guanidin, Harnstoff, Thioharnstoff, Ammonium, Imidazol, Pyridin, Thiol, Ether, Aldehyd, Keton, Phenyl, Naphthyl, Benzyl, Alkyl, Morpholin, Piperazin, Pyrrolidon, Epoxy, Azid, Acetylen, oder aus deren C₁-C₆-Alkyl-, C₃-C₁₀-Cycloalkyl-, Phenyl- oder Benzylderivaten.

8. Das Verfahren gemäß einem der Ansprüche 1 bis 7, wobei die photohärtbare Vorläuferzusammensetzung Methacrylsäure, 4-Vinylpyridin oder eine Mischung davon als copolymerisierbare(s) oder vernetzbare(s), bindende(s) Monomer(e) umfasst.

9. Das Verfahren gemäß einem der Ansprüche 1 bis 8, wobei das vernetzende Monomer ein polymerisierbares Monomer mit mindestens zwei, beispielsweise drei, ungesättigten Ethylen-Funktionalitäten ist.

10. Das Verfahren gemäß einem der Ansprüche 1 bis 9, wobei der Photoinitiator eine effektive Ein-Photonen-Absorption im Spektralbereich von UV-Wellenlängen, vorzugsweise zwischen 150 nm und 400 nm, oder im Spektralbereich von sichtbaren Wellenlängen, vorzugsweise zwischen 400 nm und 800 nm, hat.

11. Das Verfahren gemäß einem der Ansprüche 1 bis 10, wobei der Photoinitiator einen Zwei-Photonon-Absorptionsabschnitt geeignet für die Zwei-Photonen-Absorption zur Photopolymerisation mit Wellenlängen zwischen 200 nm und 1500 nm, vorzugsweise von 500 nm bis 1000 nm, vorteilhaft von 700 nm bis 850 nm, hat.

12. Das Verfahren gemäß einem der Ansprüche 1 bis 11, wobei der Photoinitiator ausgewählt ist aus der Gruppe bestehend aus Benzoinethern, substituierten Acetophenonen, Derivaten von Phosphinoxiden, Aminoketonen, Oxysulfonylketonen, Sulfonylketonen, Metallocenen und Verbindungen vom Typ Azo.

13. Das Verfahren gemäß einem der Ansprüche 1 bis 12, wobei der Photoinitiator Diphenyl(2,4,6-trimethylbenzoyl)-phosphinoxid (Lucirin TPO) ist.

14. Das Verfahren gemäß einem der Ansprüche 1 bis 13, wobei, während Schritt d), der Lichtstrahl gemäß einem vorgewählten Muster über die photohärtbare Vorläuferzusammensetzung gescannt wird, so dass der Strahl auf unterschiedliche, vorgewählte Bereiche fokussiert wird, um Polymerisation der photohärtbaren Vorläuferzusammensetzung in den vorgewählten Bereichen zu induzieren.

15. Das Verfahren gemäß einem der Ansprüche 1 bis 14, umfassend einen weiteren Schritt des Entfernens der nicht-polymerisierten Bereiche der Beschichtung, so dass das molekular geprägte Polymer an dem Substrat haften bleibt.

## Revendications

1. Procédé pour préparer un polymère à empreinte moléculaire, comprenant :
a) la sélection d'une matrice sur la base de la cible qui est destinée à se lier de manière réversible au polymère à empreinte moléculaire,
b) l'obtention d'une composition de précurseurs photodurcissable comprenant la matrice sélectionnée ci-dessus, au moins un monomère de liaison copolymérisable ou réticulable capable de se lier de manière réversible à la matrice sélectionnée ci-dessus, au moins un monomère de réticulation et au moins un photoamorceur, ladite composition de précurseurs photodurcissable étant capable de former le polymère à empreinte moléculaire par photopolymérisation,
c) le revêtement d'au moins une partie de la surface d'un substrat avec ladite composition de précurseurs photodurcissable, et
d) la focalisation d'un faisceau de lumière sur au moins une région de focalisation du revêtement ainsi déposé, et ainsi l'induction d'une absorption simultanée de deux photons dans ladite région de focalisation et donc la polymérisation de ladite composition de précurseurs photodurcissable dans ladite région de focalisation, laquelle étape est effectuée par un procédé de stéréolithographie à deux photons.

2. Procédé selon la revendication 1, dans lequel la composition de précurseurs photodurcissable ne comprend aucun solvant.

3. Procédé selon l'une quelconque des revendications 1 et 2, dans lequel la matrice est choisie dans le groupe constitué par :
- les acides aminés, les saccharides, les lipides, les nucléosides, les nucléotides, les oligomères et les polymères obtenus à partir d'acides aminés, de saccharides, de lipides, de nucléosides, de nucléotides, tels que les peptides, les protéines, les acides nucléiques, les oligosaccharides et les polysaccharides,
- les molécules ou entités biologiquement actives, notamment les médicaments tels que les antibiotiques et les anabolisants, les toxines telles que les enzymes bactériennes ou les mycotoxines, les protéines, les agents dopants, les pesticides, les insecticides, les fongicides et herbicides, les perturbateurs endocriniens et les marqueurs biologiques,
- les substances explosives,
- les nanoparticules,
- les cellules eucaryotes, telles que les cellules animales, les cellules humaines, les cellules végétales, les cellules de levure, les cellules fongiques, et les champignons,
- les bactéries,
- les virus, et
- les tissus cellulaires.

4. Procédé selon l'une quelconque des revendications 1 à 3, dans lequel la composition de précurseurs photodurcissable comprend deux monomères de liaison copolymérisables ou réticulables différents capables de se lier de manière réversible à la matrice.

5. Procédé selon l'une quelconque des revendications 1 à 4, dans lequel le monomère de liaison copolymérisable ou réticulable a :
- au moins une première fonctionnalité capable de polymériser avec un autre monomère de liaison copolymérisable ou réticulable et/ou avec le monomère de réticulation, et
- au moins une deuxième fonctionnalité, différente de la première fonctionnalité, capable de former une liaison faible et/ou une liaison de coordination et/ou une liaison covalente réversible entre ledit monomère de liaison copolymérisable ou réticulable et la matrice en assurant ainsi la liaison réversible entre le polymère à empreinte moléculaire et ladite matrice.

6. Procédé selon la revendication 5, dans lequel la première fonctionnalité est un alcène, telle qu'une fonctionnalité vinyle, allyle, acrylate ou méthacrylate.

7. Procédé selon la revendication 6, dans lequel la deuxième fonctionnalité est choisie dans le groupe constitué par hydroxyle, acide carboxylique, acide boronique, acide sulfonique, acide phosphorique, acide sulfurique, ester, amide, amine, imine, amidine, guanidine, urée, thiourée, ammonium, imidazole, pyridine, thiol, éther, aldéhyde, cétone, phényle, naphtyle, benzyle, alkyle, morpholine, pipérazine, pyrrolidone, époxy, azoture, acétylène, ou parmi leurs dérivés alkyle en C₁ à C₆, cycloalkyle en C₃ à C₁₀, phényle ou benzyle.

8. Procédé selon l'une quelconque des revendications 1 à 7, dans lequel la composition de précurseurs photodurcissable comprend l'acide méthacrylique, la 4-vinylpyridine, ou un mélange de ceux-ci en tant que monomère(s) de liaison copolymérisable(s) ou réticulable(s).

9. Procédé selon l'une quelconque des revendications 1 à 8, dans lequel le monomère de réticulation est un monomère polymérisable ayant au moins deux, par exemple trois, fonctionnalités éthylène insaturées.

10. Procédé selon l'une quelconque des revendications 1 à 9, dans lequel le photoamorceur a une absorption d'un seul photon effective dans la gamme spectrale des longueurs d'onde UV, de préférence entre 150 nm et 400 nm, ou dans la gamme spectrale des longueurs d'onde visibles, de préférence entre 400 nm et 800 nm.

11. Procédé selon l'une quelconque des revendications 1 à 10, dans lequel le photoamorceur a une section d'absorption de deux photons convenant pour une absorption de deux photons pour une polymérisation à deux photons avec des longueurs d'onde comprises entre 200 nm et 1500 nm, de préférence de 500 nm à 1000 nm, avantageusement de 700 nm à 850 nm.

12. Procédé selon l'une quelconque des revendications 1 à 11, dans lequel le photoamorceur est choisi dans le groupe constitué par les éthers de benzoïne, les acétophénones substituées, les dérivés d'oxydes de phosphine, les aminocétones, les oxysulfonylcétones, les sulfonylcétones, les métallocènes et les composés de type azo.

13. Procédé selon l'une quelconque des revendications 1 à 12, dans lequel le photoamorceur est l'oxyde de diphényl(2,4,6-triméthylbenzoyl)phosphine (Lucirin TPO).

14. Procédé selon l'une quelconque des revendications 1 à 13, dans lequel, durant l'étape d), le faisceau de lumière balaye la composition de précurseurs photodurcissable conformément à un schéma présélectionné de façon que ledit faisceau soit focalisé sur différentes régions présélectionnées, pour induire la polymérisation de ladite composition de précurseurs photodurcissable au niveau desdites régions présélectionnées.

15. Procédé selon l'une quelconque des revendications 1 à 14, comprenant une autre étape d'élimination des régions non polymérisées du revêtement de façon que le polymère à empreinte moléculaire reste attaché sur le substrat.
